# EUROPEAN PATENT APPLICATION

(11) **EP 4 851 931 A1**
(43) Date of publication of application: **09.12.2026**
(21) Application number: 26181372.9
(22) Date of filing: 27.05.2026
(51) Int. Cl.: G06T 11/60

(54) **METHOD AND SYSTEM FOR IMAGE RE-CONSTRUCTION USING COLOR AND STRUCTURAL SIMILARITY**

(30) Priority: 04.06.2025 IN 202521054122
(71) Applicant: Tata Consultancy Services Limited, Maharashtra (IN)
(72) Inventor: DANGETI, Abhishek, 500034 Hyderabad (IN); JAMWAL, Vikram, 411028 Pune (IN); GAJULA, Pavan Bhargav, 560066 Bangalore (IN)
(74) Representative: Goddar, Heinz J.

(57) **Abstract**

This disclosure relates generally to image re-construction of an input image (parent image) from a collection of images (child images) by using color and structural similarity. State-of-the-art methods based on neural image representations do not provide a continuous, high-resolution re-constructions while performing a multiple-image fusion of the collection of images. The method of the present disclosure combines a color similarity metric and a structural similarity metric to derive a reconstructed image. Firstly, each segment of the input image is mapped to the plurality of child images to obtain a first set of child images. Then, a cosine similarity is computed between each segment of the input image and the first set of the child images to obtain a second set of child images based on a Structural Similarity Index Method (SSIM). The second set of child images are utilized to re-construct the input image.

## Description

### CROSS-REFERENCE TO RELATED APPLICATIONS AND PRIORITY

The present application claims priority from Indian application no. 202521054122, filed on June 4, 2025.

### TECHNICAL FIELD

The disclosure herein generally relates to image processing, and, more particularly, to a method and system for image re-construction using color and structural similarity.

### BACKGROUND

Images are often represented in color spaces like RGB (Red, Green, Blue), where each pixel's color is described by the intensity of its red, green, and blue components. Image re-construction, also known as image recreation, is a well-established area of digital image processing that focuses on creating or enhancing images from various sources. The image re-construction involves applying digital techniques to recreate the image with an intention to enhance image quality, upscaling, or creating a new and an artistic versions.

Image recreation by segmentation involves using segmented regions to reconstruct or modify the original image. During segmentation, the image is divided into different regions or segments, each representing a distinct object or part of an object. Neural image representations (NIRs), also known as implicit or coordinate-based neural representations, offer a way to reconstruct images by learning a mapping from coordinates to pixel values. While re-creating the image, one has to focus on two main aspects, i.e., a color similarity and a structural similarity. Comparing histograms of two images can indicate the color similarity. Histograms represent the distribution of pixel values within an image, and similar histograms suggest a resemblance in the color content. The another emphasis is the structural similarity. It assesses the similarity between two images. It focuses on how well the structural information (like edges, textures, and regions) of the two images match, rather than just comparing pixel values. This is often done using the Structural Similarity Index (SSIM). The color similarity assesses how alike two images are based on their color values, while the structural similarity focuses on the spatial arrangement and relationships between features within the image.

A major challenge while re-creating the image from a collection of images using neural representations is that the neural representations do not capture a color information as well as a structural information at a segment level. Popular neural image representations do not provide a sufficient match for each segment of the input image to produce a faithful recreation. The limitations of finding the exact image for a particular segment as well finding an image that properly matches the structure of that specific segment makes it a challenging task to re-create the input image. Modern representations such as DenseNet and Mamba-ST representations only capture color information to a certain extent.

### SUMMARY

Embodiments of the present disclosure present technological improvements as solutions to one or more of the above-mentioned technical problems recognized by the inventors in conventional systems. For example, in one embodiment, a method for image re-construction using color and structural information is provided. The method includes receiving, via one or more hardware processors (a) a parent image, (b) an identified theme of the parent image, and (c) a plurality of child images, wherein the plurality of child images are utilized to re-construct the parent image. The method includes segmenting, via the one or more hardware processors, the parent image to obtain a plurality of segments. The plurality of segments are obtained by one or more image segmentation techniques that divides the parent image into distinct regions or segments, grouping pixels with similar attributes. The method includes obtaining, via the one or more hardware processors, a color histogram of each segment of the parent image from the plurality of segments. The color histogram is created by counting the occurrences of different color values within a specified range. The histogram provides a concise representation of the color distribution within each segment. The method includes treating, via the one or more hardware processors, the plurality of child images in three steps. In the first step, the plurality of child images are screened against the identified theme of the parent image to screen a first set of child images matching the identified theme, using a Large Vision Language Model (LVLM). In the second step, a color histogram of each child image is obtained from the first set of child images to compute a prominent color of each child image from the first set of child images. In the third step, a border is applied to each child image from the first set of child images to generate an associated bordered child image. A border color of the applied border is similar to the obtained color histogram of each child image from the first set of child images. The border is applied to each child image from the first set of child images to maintain an aspect ratio. The method includes performing, via the one or more hardware processors, a cosine similarity between the color histogram of each segment of the parent image and the color histogram of each bordered child image from the first set of child images to screen a second set of bordered child images. Each child image from the second set of child images is screened on the basis of a pre-defined threshold of the cosine similarity. The method includes transforming, via the one or more hardware processors, a segmented parent image and each bordered child image from the second set of child images into a gray-scale version to obtain a gray-scale version of the segmented parent image and a gray-scale version of each bordered child image from the second set of child images, to perform a structural similarity analysis. The method includes computing, via the one or more hardware processors, a structural similarity index measure (SSIM) between the gray-scale version of the segmented parent image and the gray-scale version of each bordered child image from the second set of child images. Each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM. The method includes replacing, via the one or more hardware processors, each segment of the gray-scale version of the segmented parent image with the at least one bordered child image from the second set of child images based on the SSIM to obtain a re-constructed parent image.

In another aspect, a system for image re-construction using LVLM is provided. The system includes at least one memory storing programmed instructions, one or more Input/Output (I/O) interfaces, and one or more hardware processors, and a battery performance model 110 operatively coupled to a corresponding at least one memory. The system is configured to receive (a) a parent image, (b) an identified theme of the parent image, and (c) a plurality of child images, wherein the plurality of child images are utilized to re-construct the parent image. The system is configured to segment the parent image to obtain a plurality of segments. The plurality of segments are obtained by one or more image segmentation techniques that divides the parent image into distinct regions or segments, grouping pixels with similar attributes. The system is configured to obtain a color histogram of each segment of the parent image from the plurality of segments. The color histogram is created by counting the occurrences of different color values within a specified range. The histogram provides a concise representation of the color distribution within each segment. The system is configured to treat the plurality of child images in three steps. In the first step, the plurality of child images are screened against the identified theme of the parent image to screen a first set of child images matching the identified theme, using a Large Vision Language Model (LVLM). In the second step, a color histogram of each child image is obtained from the first set of child images to compute a prominent color of each child image from the first set of child images. In the third step, a border is applied to each child image from the first set of child images to generate an associated bordered child image. A border color of the applied border is similar to the obtained color histogram of each child image from the first set of child images. The border is applied to each child image from the first set of child images to maintain an aspect ratio. The system is configured to perform a cosine similarity between the color histogram of each segment of the parent image and the color histogram of each bordered child image from the first set of child images to screen a second set of bordered child images. Each child image from the second set of child images is screened on the basis of a pre-defined threshold of the cosine similarity. The system is configured to transform a segmented parent image and each bordered child image from the second set of child images into a gray-scale version to obtain a gray-scale version of the segmented parent image and a gray-scale version of each bordered child image from the second set of child images, to perform a structural similarity analysis. The system is configured to compute a structural similarity index measure (SSIM) between the gray-scale version of the segmented parent image and the gray-scale version of each bordered child image from the second set of child images. Each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM. The system is configured to replace each segment of the gray-scale version of the segmented parent image with the at least one bordered child image from the second set of child images based on the SSIM to obtain a re-constructed parent image.

In yet another aspect, there are provided one or more non-transitory machine-readable information storage mediums comprising one or more instructions which when executed by one or more hardware processors cause: receiving (a) a parent image, (b) an identified theme of the parent image, and (c) a plurality of child images, wherein the plurality of child images are utilized to re-construct the parent image. The one or more non-transitory machine-readable information storage mediums when executed by the one or more hardware processors cause: segmenting the parent image to obtain a plurality of segments. The plurality of segments are obtained by one or more image segmentation techniques that divides the parent image into distinct regions or segments, grouping pixels with similar attributes. The one or more non-transitory machine-readable information storage mediums when executed by the one or more hardware processors cause: obtaining a color histogram of each segment of the parent image from the plurality of segments. The color histogram is created by counting the occurrences of different color values within a specified range. The histogram provides a concise representation of the color distribution within each segment. The one or more non-transitory machine-readable information storage mediums when executed by the one or more hardware processors cause: treating the plurality of child images in three steps. In the first step, the plurality of child images are screened against the identified theme of the parent image to screen a first set of child images matching the identified theme, using a Large Vision Language Model (LVLM). In the second step, a color histogram of each child image is obtained from the first set of child images to compute a prominent color of each child image from the first set of child images. In the third step, a border is applied to each child image from the first set of child images to generate an associated bordered child image. A border color of the applied border is similar to the obtained color histogram of each child image from the first set of child images. The border is applied to each child image from the first set of child images to maintain an aspect ratio. The one or more non-transitory machine-readable information storage mediums when executed by the one or more hardware processors cause: performing a cosine similarity between the color histogram of each segment of the parent image and the color histogram of each bordered child image from the first set of child images to screen a second set of bordered child images. Each child image from the second set of child images is screened on the basis of a pre-defined threshold of the cosine similarity. The one or more non-transitory machine-readable information storage mediums when executed by the one or more hardware processors cause: transforming a segmented parent image and each bordered child image from the second set of child images into a gray-scale version to obtain a gray-scale version of the segmented parent image and a gray-scale version of each bordered child image from the second set of child images, to perform a structural similarity analysis. The one or more non-transitory machine-readable information storage mediums when executed by the one or more hardware processors cause: computing a structural similarity index measure (SSIM) between the gray-scale version of the segmented parent image and the gray-scale version of each bordered child image from the second set of child images. Each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM. The one or more non-transitory machine-readable information storage mediums when executed by the one or more hardware processors cause: replacing each segment of the gray-scale version of the segmented parent image with the at least one bordered child image from the second set of child images based on the SSIM to obtain a re-constructed parent image.

It is to be understood that both the foregoing general description and the following detailed description are exemplary and explanatory only and are not restrictive of the invention, as claimed.

### BRIEF DESCRIPTION OF DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system for image re-construction using a Large Vision Language Models (LVLM), according to some embodiments of the present disclosure.
FIG. 2 shows components of an image re-construction model elaborating an integrated treatment by combining color similarity computation and structural similarity computation, according to some embodiments of the present disclosure.
FIGS. 3A, 3B, 3C and 3D are flow diagrams of an illustrative method for image re-construction using the LVLM, by the system of FIG. 1, according to some embodiments of the present disclosure.
FIGS. 4A and 4B represent a parent image and a re-constructed image respectively, of a portrait, re-constructed by the system of FIG. 1, according to some embodiments of the present disclosure.
FIGS. 5A and 5B represents a parent image and a re-constructed image respectively, of a public gathering, re-constructed by the system of FIG. 1, according to some embodiments of the present disclosure.
FIGS. 6A and 6B represents a parent image and a re-constructed image respectively, of a fruit basket, reconstructed by the system of FIG. 1, according to some embodiments of the present disclosure.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Re-constructing the input image using the input collection is a holistic way of representing a plurality of images from the image collection. This kind of re-construction involves replacing each segment of the input image with the plurality of images from the image collection. However, finding an appropriate image from the image collection that closely matches a color of the segment as well as finding the image that properly matches a structure of the respective segment makes is a challenging task. Popular neural image representations do not provide a sufficient match for each segment of the input image to produce a faithful re-construction. One of the major challenges for image re-creation using an image collection is that the current state-of-the-art the neural representations compress the information present in the image to lower dimensional vectors. These lower dimension vectors might not retain the original color and structural information needed to recreate the original image. Modern representations such as DenseNet and Mamba-ST representations only capture color information to a certain extent.

This disclosure provides a method and a system to re-construct an input image by utilizing an image collection. The method allows a user to provide the input image and the image collection, and re-create the input image by forming a collage of images from the image collection. This provides simple and interactive way for the user to explore a plurality of images present in the image collection by re-creating the input image using the image collection. The image collection undergo two-level screening. In the first-level screening color histograms are generated to calculate a color distribution present in a given segment. A segment color histogram of the segment captures the color distribution exactly and is utilized to compare the segment with the image collection based on the color similarity to obtain top retrievals from the image collection.

As these top retrievals are based on color and not the structure, a second-level screening is performed the top retrievals based on the structure. A structural similarity index is utilized to measure a structural similarity between the segment and the color retrievals. Through this approach, a final retrieval comprising images that are similar to the segment of the input image based on the color as well as the structure. This process is repeated until at least one retrieved image is identified for each segment. The images of the final retrieval are then arranged together to form a re-creation of the original input image.

As used herein, the term 'parent image' refers to a single original image that is to be re-created/ re-constructed using a collection of images.

As used herein, the term 'child image' refers an image from the collection of images that undergo one or more transformation operations and replace a segment of the parent image during the course of parent image re-construction.

As used herein, the term 'segmented parent image' refers to the parent image that is divided into one or more distinct regions using one or more segmentation techniques.

As used herein, the term 're-constructed parent image' refers to the parent image that is re-constructed by replacing each segment of the parent image by one or more child images, wherein the one or more child images undergo two-level screening operations based on a color similarity aspect and a structural similarity aspect.

As used herein, the term 'structural similarity index match' or 'SSIM' refers to a perceptual image quality metric that measures the similarity between two images. The SSIM algorithm compares two images by measuring three aspect: a luminance, a contrast, and a structural information.

As used herein, the term 'theme' refers to a prominent color tone or an overall palette of the image that is most noticeable by visual observation.

As used herein, the term 'pre-defined threshold of the cosine similarity' refers to a threshold set in the system to restrict a first set of screened/retrieved images to a certain amount.

As used herein, the term 'perfect similarity' refers to the structural similarity index measure taking a value of +1 which indicates that two images have perfect similarity in terms of structure.

As used herein, the term 'perfect dissimilarity' refers to the structural similarity index measure taking a value of -1 which indicates that two images do not have any structural similarity.

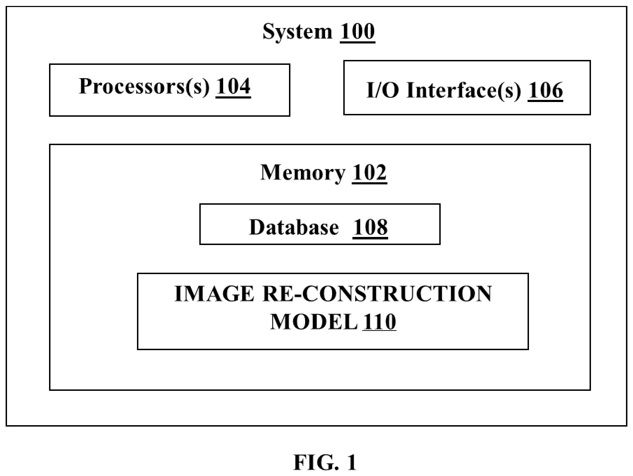

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 illustrates an exemplary block diagram of a system for image re-construction using color and structural similarity, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102.

In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like.

In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 102 includes an image re-construction model 110. The image re-construction model 110 receives a parent image, an identified theme of the parent image, and a plurality of child images to re-create/ re-construct the parent images by replacing each segment of the parent image using the plurality of child images. The image re-construction model 110 treats the parent image and the plurality of child images sequentially. First, the image re-construction model 110 segments the parent image to obtain a plurality of segments followed by obtaining a color histogram of each segment of the parent image from the plurality of segments. Second, the image re-construction model 110 treats the plurality of child images by screening the plurality of child images against the identified theme of the parent image to screen a first set of child images matching the identified theme. The image re-construction model 110 is a Large Vision Language Model (LVLM). The LVLM are a type of artificial intelligence that can understand and respond to both visual and textual data. The image re-construction model 110 compute a prominent color of each child image from the first set of child images, and then applies a border to each child image. The border is applied to each child image from the first set of child images to maintain an aspect ratio. The image re-construction model 110 performs a cosine similarity between the color histogram of each segment of the parent image and the color histogram of each bordered child image from the first set of child images to screen a second set of bordered child images. The image re-construction model 110 transforms a segmented parent image and each bordered child image into a gray-scale version to obtain a gray-scale version using a structural similarity analysis. The image re-construction model 110 computes a structural similarity index measure (SSIM) between the gray-scale version of the segmented parent image and the gray-scale version of each bordered child image. Based on the SSIM each segment of the gray-scale version of the segmented parent image is mapped to the gray-scale version of each bordered child image to identify at least one bordered child image against the gray-scale version of the segmented parent image. The image re-construction model 110 replaces each segment of the gray-scale version of the segmented parent image with the at least one bordered child image from the second set of child images based on the SSIM to obtain a re-constructed parent image. The wherein the re-constructed parent image is re-transformed based on an original color of each child image from the plurality of child images.

The memory 102 further comprises of a plurality of modules that includes programs or coded instructions that supplement applications or functions performed by the system 100 for executing different steps involved in the micro-batch processing, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

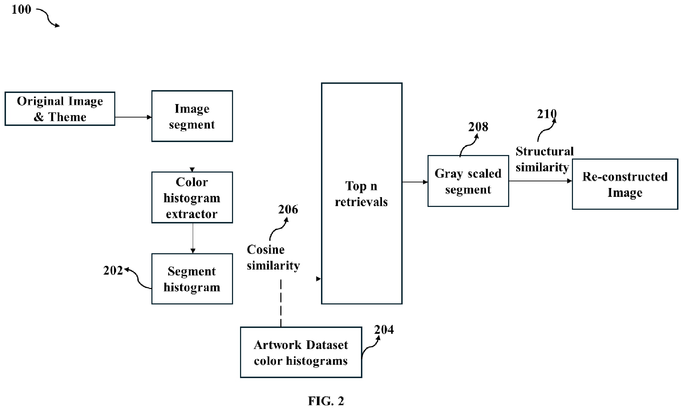

FIG. 2 shows components of an image re-construction model elaborating an integrated treatment by combining color similarity computation and structural similarity computation, according to some embodiments of the present disclosure.

As illustrated in the FIG. 2, the image re-construction model 110 combines a color similarity metric and a structural similarity metric to derive a re-constructed image. The original image, referred to here as a parent image, an identified of the parent image and a plurality of child images are first input to the system 100. The parent image undergo segmentation. The segmentation breaks down complex images into smaller, more manageable pieces, making it easier to analyze specific regions or objects. It helps identify and isolate specific regions or objects within an image, which can then be used to build a 3D re-construction. This process involves grouping similar pixels based on characteristics like color, intensity, or texture, and assigning labels to each pixel, indicating its belonging to a specific segment or object. Each segment is provided to a color histogram extractor to obtain segment histogram. At 202, each segment of the parent images is processed to obtain a color histogram of each segment of the parent image. Followed by segmentation, each segment of the parent image undergo computation of color histogram. The color histogram is created by counting the occurrences of different color values within a specified range. The histogram provides a concise representation of the color distribution within each segment. By analyzing a peak and a valley in each histogram, a dominant color, a range of colors, and an overall color distribution within each segment is identified.

At 204, the image re-construction model 110 processes each child image from the plurality of child images received from a database. The plurality of images are the ones to be considered to re-construct the parent image. The plurality of child images are screened against the identified theme of the parent image to screen a first set of child images matching the identified theme, using a Large Vision Language Model (LVLM). The color histogram is identified for each child image from the first set of child images to compute a prominent color of each child image from the first set of child image. A border is applied to each child image from the first set of child images, wherein a border color of the applied border is similar to the obtained color histogram of each child image from the first set of child images. The border is applied to each child image from the first set of child images to maintain an aspect ratio.

At 206, a cosine similarity is performed between the color histogram of each segment of the parent image and the color histogram of each bordered child image from the first set of child images to screen a second set of bordered child images. The second set of bordered child images are top n-retrievals that are identified the basis of a pre-defined threshold of the cosine similarity. The pre-defined threshold is a set range of values provided to the system that indicates the required cosine similarity value for a certain child image. The set range can be specified anywhere between -1 to +1.

At 208, the top n-retrievals as well as the plurality of segments are processed wherein each bordered child image of the second set undergo gray scale transformation. The segmented parent image and each bordered child image from the second set of child images are transformed into a gray-scale version to obtain a gray-scale version of the segmented parent image and a gray-scale version of each bordered child image from the second set of child images, This gray-scale transformation is done to perform a structural similarity analysis. The structural similarity between two images indicates how similar in structure, luminance and contrast the two images.

At 210, a structural similarity index measure (SSIM) is computed between the gray-scale version of the segmented parent image and the gray-scale version of each bordered child image. Each segment of the gray-scale version of the segmented parent image is mapped to the gray-scale version of each bordered child image from the second set to child images to identify at least one bordered child image against the gray-scale version of the segmented parent image, based on the SSIM. The SSIM based mapping groups one or more segments of the parent image under a suitable bordered child image. This segregation suggests at least one bordered child image to be suitable based on the color similarity as well as the structural similarity to replace the one or more segments of the parent image. Therefore, each segment of the gray-scale version of the segmented parent image is replaced with the at least one bordered child image from the second set of child images based on the SSIM to obtain a re-constructed parent image.

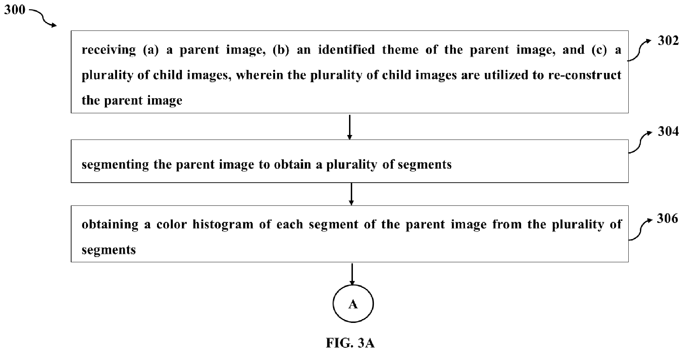

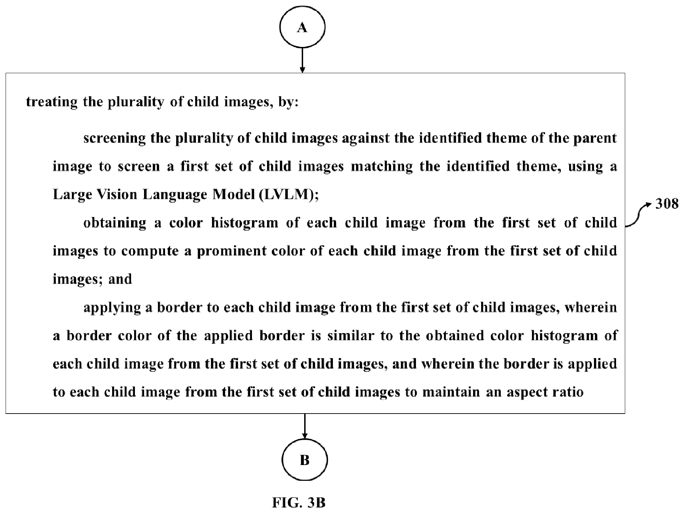

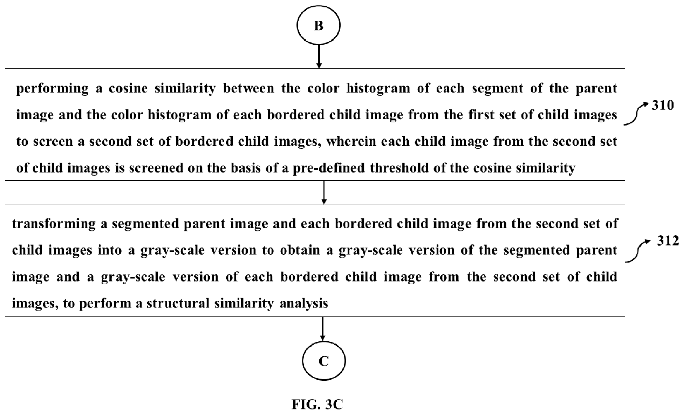

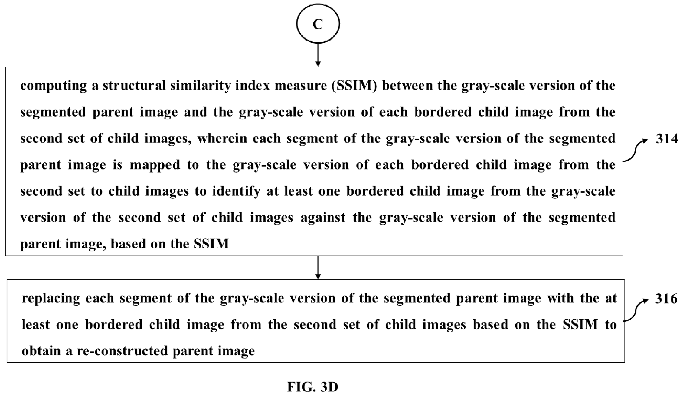

FIGS. 3A, 3B, 3C and 3D are flow diagrams of an illustrative method for image re-construction using the LVLM, by the system of FIG. 1, according to some embodiments of the present disclosure.

The steps of the method 300 of the present disclosure will now be explained with reference to the components or blocks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically. Further, some steps may be performed simultaneously.

At step 302 of the method 300, the one or more hardware processors 104 are configured to receive (a) a parent image, (b) an identified theme of the parent image, and (c) a plurality of child images. The parent image is the one which is re-constructed using the plurality of child images. The identified theme of the parent image guides the image re-construction model 110 during a color similarity analysis. The theme refers to a prominent color tone or an overall palette of the image that is most noticeable by visual observation. E.g., A predominantly warm color palette (like reds, oranges, and yellows) signifies one theme which is significantly distinguishable than a cooler palette (like blues and greens). The theme identification restricts the child images to follow the theme of the parent image, so the re-constructed image consists of child images from the same theme as that of the parent image. The plurality of child images are the ones that are utilized in re-constructing the parent image.

At step 304 of the method 300, the one or more hardware processors 104 are configured to segment the parent image to obtain a plurality of segments. The segmentation breaks down the parent image into smaller, more manageable pieces, making it easier to analyze specific regions or objects.

According to an embodiment of the present disclosure, one or more segmentation techniques are utilized to obtain the plurality of segments of the parent image. The one or more segmentation techniques involves determining a fixed height and width to determine a segment size. The segment size is utilized to obtain equally sized segments from the parent image.

At step 306 of the method 300, the one or more hardware processors 104 are configured to obtain a color histogram of each segment of the parent image from the plurality of segments. Followed by segmentation, each segment of the parent image undergoes computation of color histogram. The color histogram is created by counting the occurrences of different color values within a specified range. For color images, preferably, three color (red, green, and blue - (RGB)) channels are considered separately. A color space (e.g., RGB) is divided into bins, and the number of pixels falling within each bin is counted. Each bin represents a combination of color values (e.g., a specific red, green, and blue value).

At step 308 of the method 300, the one or more hardware processors 104 are configured to treat the plurality of child images. The treatment to each child images include theme based screening followed by color histogram retrieval and border application to each child image. Firstly, the plurality of child images are screened against the identified theme of the parent image to screen a first set of child images matching the identified theme. This is done using a Large Vision Language Model (LVLM). The LVLM is a type of artificial intelligence model that combines the capabilities of both computer vision and natural language processing. It's trained on large datasets of images and their corresponding text descriptions, enabling it to understand and interact with visual information through language. LVLM can perform tasks like image captioning, visual question answering, and object detection. Secondly, each child image from the first set of child images to compute a prominent color of each child image from the first set of child images. Similar to treating each segment of the parent image, the color histogram is created for each child image of the first set of child images by counting the occurrences of different color values within a specified range. And thirdly, a border is applied to each child image from the first set of child images. A border color of the applied border is similar to the obtained color histogram of each child image from the first set of child images. The border is applied to each child image from the first set of child images to maintain an aspect ratio. The prominent color is picked for the border color because it does not adversely affect the output mosaic made up of the child images.

At step 310 of the method 300, the one or more hardware processors 104 are configured to perform a cosine similarity. The cosine similarity is performed between the color histogram of each segment of the parent image and the color histogram of each bordered child image from the first set of child images. Based on the cosine similarity, a second set of bordered child images is obtained. Each child image from the second set of child images is screened on the basis of a pre-defined threshold of the cosine similarity. The pre-defined threshold for cosine similarity is a value used to determine the level of similarity between two images under comparison, i.e., each segment of the parent image and each bordered child image. The cosine similarity is a measure of the angle between two vectors, ranges from -1 to 1, where 1 indicates identical vectors and -1 indicates opposite vectors. The pre-defined threshold helps to classify vectors as similar or dissimilar based on this similarity score. The pre-defined threshold is a set range of values provided to the system that indicates the required cosine similarity value for a certain child image. The set range can be specified anywhere between -1 to +1.

At step 312 of the method 300, the one or more hardware processors 104 are configured to transform a segmented parent image and each bordered child image into respective gray-scale versions. The segmented parent image and each bordered child image from the second set of child images are transformed into the gray-scale version to obtain a gray-scale version of the segmented parent image and a gray-scale version of each bordered child image from the second set of child images,. The gray-scale transformation is a basis for perform a structural similarity analysis.

The gray-scale transformation converts each segment of the parent image having original colors and each bordered child image having original colors into a grayscale image, where each pixel's value of the child image and the segmented parent image represents a single luminance or brightness level, enabling further analysis.

At step 314 of the method 300, the one or more hardware processors 104 are configured to compute a structural similarity index measure (SSIM) between the gray-scale version of the segmented parent image and the gray-scale version of each bordered child image from the second set of child images.

The SSIM assesses the quality of each segment of the parent image and each bordered child image. The SSIM is represented as a numerical value that quantifies the similarity between two images, considering luminance, contrast, and structural information. Each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM.

The SSIM is computed as: $SSIM \left(x, y\right) = \frac{\left(2{μ}_{x}{μ}_{y}+{C}_{1}\right) \left(2{σ}_{xy}+{C}_{2}\right)}{\left({μ}_{x +}^{2}+{μ}_{y}^{2}+{C}_{1}\right) \left({σ}_{x +}^{2}+{σ}_{y}^{2}+{C}_{2}\right)}$ (1)
where, (x) represents a segment, (y) represents the child image scanned against the segment, *µₓ and µ_{y}* indicates a luminance of the segment, and the luminance of the child image respectively, *σₓ and σ_{y}* indicates a contrast of the segment, and the contract of the child image respectively, *σ_{xy}* indicates a structural difference between the segment and the child image under comparison, and *C*₁ and *C*₂ are regularization constants.

A value +1 of the SSIM indicates a perfect similarity between at least one segment of the gray-scale version of the segmented parent image and the at least one bordered child image from the second set of child images, and a value -1 of the SSIM indicates a perfect dissimilarity between the at least one segment of the gray-scale version of the segmented parent image and the at least one bordered child image from the second set of child images.

At step 316 of the method 300, the one or more hardware processors 104 are configured to replace each segment of the gray-scale version of the segmented parent image with the at least one bordered child image from the second set of child images based on the SSIM to obtain a re-constructed parent image. Based on the color similarity and the structural similarity, each bordered child image from the second set of child images are the ones that are considered as suitable for replacing respective segments of the parent image. The SSIM based mapping groups one or more segments of the parent image under a suitable bordered child image. This segregation suggests at least one bordered child image to be suitable based on the color similarity as well as the structural similarity to replace the one or more segments of the parent image. Therefore, each segment of the gray-scale version of the segmented parent image is replaced with the at least one bordered child image from the second set of child images based on the SSIM to obtain the re-constructed parent image.

### USE CASE EXAMPLES:

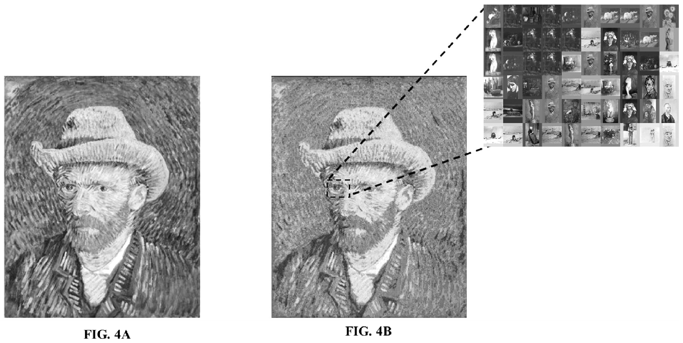

Example-1: A portrait image of famous artist, Van-Gogh is re-constructed using his own 273 paintings. Initially, the portrait image is segmented into 260x320 segments using fixed segmentation techniques. And then a color histogram is computed for each 260x320 segments. The 273 painting are screened at two level. In the first level, the screening is conducted based on theme. Out of 79000, 1749 images are selected and formed a first set. In the second level, the screening is conducted on the 1749 images of the first set based on the color and structural similarity. Out of 1749 images of the first set, 543 images are selected and formed into a second set. A segmented portrait image and the images of the second set are transformed into gray scale and each segment of the portrait image is mapped to at least one images of the second set based on the SSIM scores. The re-constructed portrait image of Van-Gogh comprises 273 images from his own collection and is shown in FIG. 4.

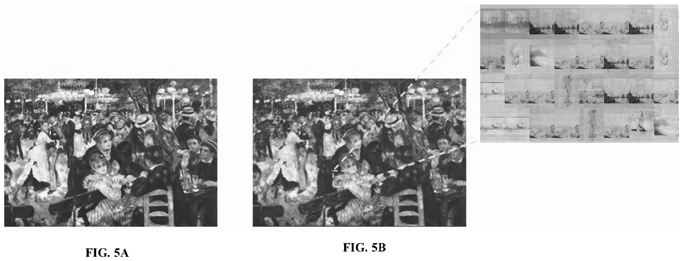

Example-2: An image of Impressionism artwork titled Dance at Le Moulin de la Galette created by Pierre-Auguste Renoir is re-constructed using 1910 artworks from the Impressionism art movement collection. Initially, the Impressionism artwork is segmented into 260x180 using fixed segmentation techniques. And then a color histogram is computed for each 260x180 segments. The 1910 painting are screened at two level. In the first level, the screening is conducted based on the theme. Out of 79000, 13059 images are selected and formed a first set. In the second level, the screening is conducted on the images of the first set based on the structural similarity. Out of 13059 images of the first set, 3459 images are selected and formed into a second set. A segmented portrait image and the images of the second set are transformed into gray scale and each segment of the portrait image is mapped to at least one images of the second set based on the SSIM scores. The re-constructed Impressionism artwork comprises of 1910 images from the Impressionism art movement collection and is shown in FIG. 5.

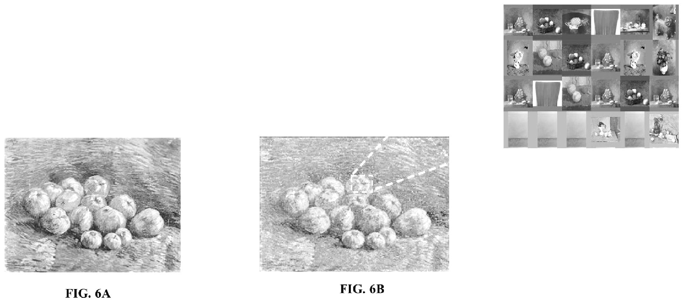

Example-3: An apples artwork image by Vincent Van Gogh depicting a fruit basket containing apples is re-constructed using a database created by collecting 2000 artworks depicting apples in one or the other way from Wiki Art collection and utilizing 306 artworks from this database. The LVLM is utilized to annotate each artwork and pick artworks with the "apple" in their annotation. We utilize these artworks to re-create the Apples artwork by Vincent Van Gogh. Initially, the artwork is segmented into 240x180 segments using fixed segmentation techniques. And then a color histogram is computed for each 240x180 segments. The 306 painting are screened at two level. In the first level, the screening is conducted based on theme. Out of 79000, 2000 images are selected and formed a first set. In the second level, the screening is conducted on the 2000 images of the first set based on the color and structural similarity. Out of 2000 images of the first set, 1247 images are selected and formed into a second set. A segmented portrait image and the images of the second set are transformed into gray scale and each segment of the portrait image is mapped to at least one images of the second set based on the SSIM scores. The re-constructed "Apples" artwork comprises of 306 images from the created apples collection and is shown in FIG. 6.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

Therefore, the present disclosure employs a two-level screening to re-construct the a single original input image by utilizing the plurality of child images. In the first-level screening color histograms are generated to calculate a color distribution present in a given segment. A segment color histogram of the segment captures the color distribution exactly and is utilized to compare the segment with the image collection based on the color similarity to obtain top retrievals from the image collection. As these top retrievals are based on color and not the structure, a second-level screening is performed the top retrievals based on the structure. A structural similarity index is utilized to measure a structural similarity between the segment and the color retrievals. Through this approach, a final retrieval comprising images that are similar to the segment of the input image based on the color as well as the structure. This process is repeated until at least one retrieved image is identified for each segment. The images of the final retrieval are then arranged together to form the re-construction of the original input image.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media

It is intended that the disclosure and examples be considered as exemplary only, with a true scope of disclosed embodiments being indicated by the following claims.

## Claims

1. A processor implemented method (300) of image re-construction, the method comprising:
receiving (302), via one or more hardware processors, (a) a parent image, (b) an identified theme of the parent image, and (c) a plurality of child images, wherein the plurality of child images are utilized to re-construct the parent image;
segmenting (304), via the one or more hardware processors, the parent image to obtain a plurality of segments;
obtaining (306), via the one or more hardware processors, a color histogram of each segment of the parent image from the plurality of segments;
treating (308), via the one or more hardware processors, the plurality of child images, by:
screening the plurality of child images against the identified theme of the parent image to screen a first set of child images matching the identified theme, using a Large Vision Language Model (LVLM);
obtaining a color histogram of each child image from the first set of child images to compute a prominent color of each child image from the first set of child images; and
applying a border to each child image from the first set of child images, to generate an associated bordered child image, wherein a border color of the applied border is similar to the obtained color histogram of each child image from the first set of child images, and wherein the border is applied to each child image from the first set of child images to maintain an aspect ratio;
performing (310), via the one or more hardware processors, a cosine similarity between the color histogram of each segment of the parent image and the color histogram of each bordered child image from the first set of child images to screen a second set of bordered child images, wherein each child image from the second set of child images is screened on the basis of a pre-defined threshold of the cosine similarity;
transforming (312), via the one or more hardware processors, a segmented parent image and each bordered child image from the second set of child images into a gray-scale version to obtain a gray-scale version of the segmented parent image and a gray-scale version of each bordered child image from the second set of child images, to perform a structural similarity analysis;
computing (314), via the one or more hardware processors, a structural similarity index measure (SSIM) between the gray-scale version of the segmented parent image and the gray-scale version of each bordered child image from the second set of child images, wherein each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM; and
replacing (316), via the one or more hardware processors, each segment of the gray-scale version of the segmented parent image with the at least one bordered child image from the second set of child images based on the SSIM to obtain a re-constructed parent image.

2. The method as claimed in claim 1, wherein a value +1 of the SSIM indicates a perfect similarity between at least one segment of the gray-scale version of the segmented parent image and the at least one bordered child image from the second set of child images, and
a value -1 of the SSIM indicates a perfect dissimilarity between the at least one segment of the gray-scale version of the segmented parent image and the at least one bordered child image from the second set of child images.

3. The method as claimed in claim 1, wherein the re-constructed parent image is re-transformed based on an original color of each child image from the plurality of child images.

4. The method as claimed in claim 1, wherein the SSIM is measured as: $SSIM \left(x, y\right) = \frac{\left(2{μ}_{x}{μ}_{y}+{C}_{1}\right) \left(2{σ}_{xy}+{C}_{2}\right)}{\left({μ}_{x +}^{2}+{μ}_{y}^{2}+{C}_{1}\right) \left({σ}_{x +}^{2}+{σ}_{y}^{2}+{C}_{2}\right)} ,$
where, (x) represents a segment,
(y) represents the child image scanned against the segment, *µₓ and µ_{y}* indicates a luminance of the segment, and the luminance of the child image respectively,
*σₓ and σ_{y}* indicates a contrast of the segment, and the contract of the child image respectively,
*σ_{xy}* indicates a structural difference between the segment and the child image under comparison, and
*C*₁ and *C*₂ are regularization constants.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive (a) a parent image, (b) an identified theme of the parent image, and (c) a plurality of child images, wherein the plurality of child images are utilized to re-construct the parent image;
segment the parent image to obtain a plurality of segments;
obtain a color histogram of each segment of the parent image from the plurality of segments;
treat the plurality of child images, by:
screening the plurality of child images against the identified theme of the parent image to screen a first set of child images matching the identified theme, using a Large Vision Language Model (LVLM);
obtaining a color histogram of each child image from the first set of child images to compute a prominent color of each child image from the first set of child images; and
applying a border to each child image from the first set of child images, to generate an associated bordered child image, wherein a border color of the applied border is similar to the obtained color histogram of each child image from the first set of child images, and wherein the border is applied to each child image from the first set of child images to maintain an aspect ratio;
perform a cosine similarity between the color histogram of each segment of the parent image and the color histogram of each bordered child image from the first set of child images to screen a second set of bordered child images, wherein each child image from the second set of child images is screened on the basis of a pre-defined threshold of the cosine similarity;
transform a segmented parent image and each bordered child image from the second set of child images into a gray-scale version to obtain a gray-scale version of the segmented parent image and a gray-scale version of each bordered child image from the second set of child images, to perform a structural similarity analysis;
compute a structural similarity index measure (SSIM) between the gray-scale version of the segmented parent image and the gray-scale version of each bordered child image from the second set of child images, wherein each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM; and
replace each segment of the gray-scale version of the segmented parent image with the at least one bordered child image from the second set of child images based on the SSIM to obtain a re-constructed parent image.

6. The system as claimed in claim 5, wherein a value +1 of the SSIM indicates a perfect similarity between at least one segment of the gray-scale version of the segmented parent image and the at least one bordered child image from the second set of child images, and
a value -1 of the SSIM indicates a perfect dissimilarity between the at least one segment of the gray-scale version of the segmented parent image and the at least one bordered child image from the second set of child images.

7. The system as claimed in claim 5, wherein the re-constructed parent image is re-transformed based on an original color of each child image from the plurality of child images.

8. The system as claimed in claim 5, wherein the SSIM is measured as: $SSIM \left(x, y\right) = \frac{\left(2{μ}_{x}{μ}_{y}+{C}_{1}\right) \left(2{σ}_{xy}+{C}_{2}\right)}{\left({μ}_{x +}^{2}+{μ}_{y}^{2}+{C}_{1}\right) \left({σ}_{x +}^{2}+{σ}_{y}^{2}+{C}_{2}\right)}$
where, (*x*) represents a segment,
(y) represents the child image scanned against the segment,
*µₓ and µ_{y}* indicates a luminance of the segment, and the luminance of the child image respectively,
*σₓ and σ_{y}* indicates a contrast of the segment, and the contract of the child image respectively,
*σ_{xy}* indicates a structural difference between the segment and the child image under comparison, and
*C*₁ and *C*₂ are regularization constants.

9. One or more non-transitory machine-readable information storage mediums comprising one or more instructions which when executed by one or more hardware processors cause:
receiving (a) a parent image, (b) an identified theme of the parent image, and (c) a plurality of child images, wherein the plurality of child images are utilized to re-construct the parent image;
segmenting the parent image to obtain a plurality of segments;
obtaining a color histogram of each segment of the parent image from the plurality of segments;
treating the plurality of child images, by:
screening the plurality of child images against the identified theme of the parent image to screen a first set of child images matching the identified theme, using a Large Vision Language Model (LVLM);
obtaining a color histogram of each child image from the first set of child images to compute a prominent color of each child image from the first set of child images; and
applying a border to each child image from the first set of child images, to generate an associated bordered child image, wherein a border color of the applied border is similar to the obtained color histogram of each child image from the first set of child images, and wherein the border is applied to each child image from the first set of child images to maintain an aspect ratio;
performing a cosine similarity between the color histogram of each segment of the parent image and the color histogram of each bordered child image from the first set of child images to screen a second set of bordered child images, wherein each child image from the second set of child images is screened on the basis of a pre-defined threshold of the cosine similarity;
transforming a segmented parent image and each bordered child image from the second set of child images into a gray-scale version to obtain a gray-scale version of the segmented parent image and a gray-scale version of each bordered child image from the second set of child images, to perform a structural similarity analysis;
computing a structural similarity index measure (SSIM) between the gray-scale version of the segmented parent image and the gray-scale version of each bordered child image from the second set of child images, wherein each segment of the gray-scale version of the segmented parent image is mapped to the gray-scale version of each bordered child image from the second set to child images to identify at least one bordered child image from the gray-scale version of the second set of child images against the gray-scale version of the segmented parent image, based on the SSIM; and
replacing each segment of the gray-scale version of the segmented parent image with the at least one bordered child image from the second set of child images based on the SSIM to obtain a re-constructed parent image.

10. The one or more non-transitory machine readable information storage mediums as claimed in claim 9, wherein a value +1 of the SSIM indicates a perfect similarity between at least one segment of the gray-scale version of the segmented parent image and the at least one bordered child image from the second set of child images, and
a value -1 of the SSIM indicates a perfect dissimilarity between the at least one segment of the gray-scale version of the segmented parent image and the at least one bordered child image from the second set of child images.

11. The one or more non-transitory machine readable information storage mediums as claimed in claim 9, wherein the re-constructed parent image is re-transformed based on an original color of each child image from the plurality of child images.

12. The one or more non-transitory machine readable information storage mediums as claimed in claim 9, wherein the SSIM is measured as: $SSIM \left(x, y\right) = \frac{\left(2{μ}_{x}{μ}_{y}+{C}_{1}\right) \left(2{σ}_{xy}+{C}_{2}\right)}{\left({μ}_{x +}^{2}+{μ}_{y}^{2}+{C}_{1}\right) \left({σ}_{x +}^{2}+{σ}_{y}^{2}+{C}_{2}\right)} ,$
where, (*x*) represents a segment,
(y) represents the child image scanned against the segment,
*µₓ and µ_{y}* indicates a luminance of the segment, and the luminance of the child image respectively,
*σₓ and σ_{y}* indicates a contrast of the segment, and the contract of the child image respectively,
*σ_{xy}* indicates a structural difference between the segment and the child image under comparison, and
*C*₁ and *C*₂ are regularization constants.
